# EUROPÄISCHE PATENTSCHRIFT

(11) **EP 2 951 688 B1**
(45) Veröffentlichungstag und Bekanntmachung des Hinweises auf die Patenterteilung: **15.08.2018**
(21) Anmeldenummer: 14701100.1
(22) Anmeldetag: 22.01.2014
(51) Int. Cl.: G06F 9/48, G06F 9/50, G06F 1/32, H04L 29/08, G08G 1/16

(54) **VERFAHREN ZUR REDUZIERUNG EINER VORZUHALTENDEN GESAMTRECHENKAPAZITÄT, FAHRZEUG-ZU-X-KOMMUNIKATIONSVORRICHTUNG UND VERWENDUNG DER FAHRZEUG-ZU-X-KOMMUNIKATIONSVORRICHTUNG**
METHOD FOR REDUCING A TOTAL COMPUTATION COMPACITY THAT NEEDS TO BE KEPT, VEHICLE-TO-X COMMUNICATION APPARATUS AND USE OF THE VEHICLE-TO-X COMMUNICATION APPARATUS
PROCÉDÉ DE RÉDUCTION D'UNE CAPACITÉ DE CALCUL TOTALE À TENIR À DISPOSITION, DISPOSITIF DE COMMUNICATION ENTRE VÉHICULES ET UTILISATION DU DISPOSITIF DE COMMUNICATION ENTRE VÉHICULES

(30) Priorität: 30.01.2013 DE 102013201481
(43) Veröffentlichungstag der Anmeldung: 09.12.2015
(73) Patentinhaber: Continental Teves AG&Co. Ohg, 60488 Frankfurt (DE)
(72) Erfinder: STÄHLIN, Ulrich, 65760 Eschborn (DE); KELLING, Enno, 65760 Eschborn (DE)
(74) Vertreter: Wagner, Philipp
(86) Internationale Anmeldenummer: PCT/EP2014/051228
(87) Internationale Veröffentlichungsnummer: WO 2014/118055

(56) Entgegenhaltungen:
- DE-A1-102011 078 704
- DE-A1-102012 204 880
- MAXIM RAYA ET AL: "SECURING VEHICULAR COMMUNICATIONS", IEEE WIRELESS COMMUNICATIONS, IEEE SERVICE CENTER, PISCATAWAY, NJ, US, Bd. 13, Nr. 5, 31. Oktober 2006 (2006-10-31), Seiten 8-15, XP011143978, ISSN: 1536-1284
- GLAS B ET AL: "Car-to-Car Communication Security on Reconfigurable Hardware", 2009 IEEE 69TH VEHICULAR TECHNOLOGY CONFERENCE; APRIL 26-29, 2009, BARCELONA, SPAIN, IEEE, PISCATAWAY, NJ, USA, 26. April 2009 (2009-04-26), Seiten 1-5, XP031474380, ISBN: 978-1-4244-2517-4
- "Verify-on-Demand â A Practical and Scalable Approach for Broadcast Authentication in Vehicle Safety Communication", IP.COM JOURNAL, IP.COM INC., WEST HENRIETTA, NY, US, 10. Oktober 2008 (2008-10-10), XP013126503, ISSN: 1533-0001

## Beschreibung

Die Erfindung betrifft ein Verfahren zur Reduzierung einer vorzuhaltenden Gesamtrechenkapazität gemäß Oberbegriff von Anspruch 1, eine Fahrzeug-zu-X-Kommunikationsvorrichtung gemäß Oberbegriff von Anspruch 14 sowie deren Verwendung.

Im Stand der Technik sind Fahrzeug-zu-X-Kommunikations-systeme bekannt, die sowohl zur Übertragung verkehrsbezogener Daten als auch zur Übertragung verschiedener Service-Daten, wie etwa Wetterdaten, ausgebildet sind. Die Fahrzeug-zu-X-Kommunikation basiert dabei nicht nur auf dem Datenaustausch zwischen Fahrzeugen untereinander (Fahrzeug-zu-Fahrzeug-Kommunikation), sondern auch auf dem Datenaustausch zwischen Fahrzeugen und Infrastruktureinrichtungen (Fahrzeug-zu-Infrastruktur-Kommunikation). Da die vollständige elektronische Verarbeitung aller von einem Fahrzeug empfangenen Fahrzeug-zu-X-Botschaften mit einem vergleichsweise hohen und aus Kostengründen oftmals nicht realisierbaren Rechenaufwand verbunden ist, sind bereits Filterverfahren bekannt, mittels derer zunächst eine Vorverarbeitung der empfangenen Fahrzeug-zu-X-Botschaften erfolgt.

In der Veröffentlichung Maxim Raya et al: "Securing Vehicular communications", IEEE WIRELESS COMMUNICATIONS, 1. Oktober 2006, Seiten 8-15, XP11143978, ISSN: 1536-1284 werden potentielle Sicherheitsrisiken der Fahrzeugkommunikation analysiert und Vorschläge zu deren Überwindung beschrieben.

Die DE 10 2008 060 231 A1 beschreibt in diesem Zusammenhang ein Verfahren zum Selektieren von unterschiedlichen, mittels Fahrzeug-zu-X-Kommunikation übertragenen Daten. Anhand eines Daten-Frames werden die empfangenen Daten von einem Datenfilter in der Empfangsvorrichtung unterschieden und beispielsweise an ein Fahrerassistenzsystem oder eine Unterhaltungseinrichtung weitergeleitet. Dies ermöglicht eine Sortierung der empfangenen Daten vor deren eigentlicher Verarbeitung. Zur Übertragung der Daten werden Sende- und Empfangseinrichtungen auf Basis der WLAN-Standards 802.11a/b/g/n/p genutzt.

Die DE 10 2010 002 092 A1 beschreibt eine Datenvorverarbeitung für empfangene Fahrzeug-zu-X-Botschaften, welche einer Weiterleitung der Botschaften an die zugehörigen Anwendungen und Systeme im Fahrzeug sowie deren Verarbeitung durch diese Anwendungen und Systeme vorausgeht. Die Datenvorverarbeitung kann dabei die Überprüfung eines Datensicherheitslevels der Botschaft umfassen und zusätzlich eine Datenreduktion ausführen. Die Datenreduktion bewirkt, dass Informationen über bestimmte Objekte oder Situationen ausgeblendet und entsprechend nicht weitergeleitet und verarbeitet werden. So werden etwa Informationen über Objekte, welche zu weit vom empfangenden Fahrzeug entfernt sind bzw. Informationen über Objekte, die vom Fahrzeug erst nach einer bestimmten Zeitspanne erreicht werden, nicht berücksichtigt. Ebenso werden viele örtlich nahe Objekte mit grundsätzlich gleichem Verhalten zu einer Situation zusammengefasst, z.B. zu einem Stau. Auch die ausschließliche Berücksichtigung von Objekten, welche sich im vorgesehenen Bewegungsschlauch des Fahrzeugs befinden, ist möglich. Die von den einzelnen Anwendungen zu verarbeitende Datenmenge kann dadurch deutlich reduziert werden.

Die DE 10 2012 204 880 A1 offenbart ein Verfahren zur Reduzierung der Rechenlast bei einer Datensicherheitsprüfung von mittels Fahrzeug-zu-X-Kommunikation empfangenen Datenpaketen. Die Datensicherheitsprüfung besteht hier aus dem Überprüfen einer mittels kryptografischer Algorithmen verschlüsselten Signatur, welche mit hohem Rechenaufwand verbunden ist und den Einsatz dedizierter Elektronik erforderlich macht. Zur Reduzierung der Rechenlast wird zunächst eine Vorverarbeitung der empfangenen Fahrzeug-zu-X-Botschaften vorgenommen, welche diese in unterschiedliche Kategorien priorisiert. Die Priorisierung kann dabei an Hand unterschiedlicher Kriterien, wie z.B. Abstand des Senders zum Empfänger oder TTC (time to collision) des Senders zum Empfänger erfolgen. Zunächst werden nur die Signaturen von mit hoher Priorität versehenen Datenpaketen überprüft. Falls anschließend noch freie Rechenkapazität zur Verfügung steht, werden weitere Datenpakete überprüft. Ebenso wird die Möglichkeit beschrieben, den Inhalt eines Datenpakets mittels Umfeldsensordaten zu verifizieren, wodurch auf eine rechenintensive Überprüfung der Signatur verzichtet werden kann.

Nachteilig bei den im Stand der Technik bekannten Fahrzeug-zu-X-Kommunikationsverfahren ist es jedoch, dass diese eine Verringerung der notwendigerweise bereitzustellenden Rechenkapazität für die Fahrzeug-zu-X-Kommunikation ausschließlich über eine Vorfilterung der zu verarbeitenden Fahrzeug-zu-X-Botschaften bzw. eine Verringerung der zu verarbeitenden Datenmenge zu erreichen suchen. Somit sind die Möglichkeiten zur Verringerung der notwendigerweise bereitzustellenden Rechenkapazität jedoch auf Gesichtspunkte vor der eigentlichen Verarbeitung beschränkt.

Die Aufgabe der vorliegenden Erfindung ist es daher, ein Verfahren vorzuschlagen, welches unabhängig von bekannten Vorverarbeitungsverfahren und Vorfilterungsverfahren eine zusätzliche Verringerung der notwendigerweise bereitzustellenden Rechenkapazität ermöglicht.

Diese Aufgabe wird erfindungsgemäß durch das Verfahren zur Reduzierung einer vorzuhaltenden Gesamtrechenkapazität gemäß Anspruch 1 gelöst.

Die Erfindung betrifft ein Verfahren zur Reduzierung einer vorzuhaltenden Gesamtrechenkapazität, bei welchem ein elektronisches Rechenmodul eines Fahrzeugsystems die Gesamtrechenkapazität vorhält, wobei eine Vielzahl von Softwaremodulen vom elektronischen Rechenmodul ausgeführt wird, wobei die Softwaremodule Rechenkapazität für Datenverarbeitungsprozesse und für Eingangsdatenprüfprozesse beanspruchen und wobei die Eingangsdatenprüfprozesse nach Maßgabe einer Taktung wiederholt werden. Das Verfahren zeichnet sich dadurch aus, dass die Taktung anpassbar ist.

Bei den Softwaremodulen kann es sich um unterschiedliche Computerprogrammprodukte handeln, welche auf dem Rechenmodul zeitlich parallel ausgeführt werden. Jedes der Softwaremodule führt dabei Datenverarbeitungsprozesse aus, sofern für dieses Softwaremodul zu verarbeitende Daten vorliegen. Die für die Datenverarbeitungsprozesse benötigte Rechenkapazität ist also abhängig von der Art und der Anzahl der zu verarbeitenden Daten und wird vom jeweiligen Softwaremodul beim Rechenmodul nach Bedarf beansprucht. Zusätzlich beansprucht jedes Softwaremodul Rechenkapazität für den dem Softwaremodul zugehörigen Eingangsdatenprüfprozess. Der Eingangsdatenprüfprozess wird typischerweise für jedes Softwaremodul mehrere Male pro Sekunde ausgeführt und stellt ein Überprüfen der vorliegenden und zu verarbeitenden Daten dahingehend dar, ob die vorliegenden und zu verarbeitenden Daten für das überprüfende Softwaremodul relevant sind und somit also von diesem zu verarbeiten sind. Auch die Eingangsdatenprüfprozesse erfordern Rechenkapazität, welche ebenfalls vom Softwaremodul beim Rechenmodul beansprucht wird.

Die Erfindung führt nun zu dem Vorteil, dass über die anpassbare Taktung, welche den zeitlichen Abstand zwischen zwei aufeinanderfolgenden Eingangsdatenprüfprozessen vorgibt, eine Anpassung der für die Eingangsdatenprüfprozesse notwendigen Rechenkapazität möglich ist. Somit kann die vorgehaltene Gesamtrechenkapazität flexibler genutzt und verteilt werden. Beispielsweise kann vorübergehend Rechenkapazität von den Eingangsdatenprüfprozessen abgezogen werden und den laufenden Datenverarbeitungsprozessen zur Verfügung gestellt werden. Somit kann auch die notwendigerweise vorzuhaltende Gesamtrechenkapazität reduziert werden. Dies wiederum ermöglicht eine Kostenersparnis, da ein weniger leistungsstarkes und somit weniger kostenintensives Rechenmodul verwendet werden kann.

Bevorzugt ist es vorgesehen, dass die Taktung abhängig von einer Rechenauslastung des Rechenmoduls angepasst wird. Unter Rechenauslastung wird dabei im Sinne der Erfindung das Verhältnis der von den Softwaremodulen beanspruchten Rechenkapazität zur Gesamtrechenkapazität verstanden. Üblicherweise nimmt die Rechenauslastung im Wesentlichen in Abhängigkeit der von den Datenverarbeitungsprozessen zu verarbeitenden Datenmenge zu bzw. ab. Durch die Anpassung der Taktung in Abhängigkeit von der Rechenauslastung ergibt sich also der Vorteil, dass flexibel auf die jeweiligen Erfordernisse hinsichtlich der beanspruchten Rechenkapazität reagiert werden kann.

Besonders bevorzugt ist es vorgesehen, dass die Taktung mit zunehmender Rechenauslastung verlängert wird und mit abnehmender Rechenauslastung verkürzt wird. Die Verlängerung bzw. die Verkürzung kann dabei nach einem vorgegebenen Zusammenhang erfolgen. Dieser Zusammenhang kann z.B. linear sein, stufenartig bei Überschreiten bzw. Unterschreiten von Schwellwerten oder auch eine Kombination von beidem. Ebenso ist aber auch jeder andere vorgebbare Zusammenhang möglich. Durch die Verlängerung der Taktung mit zunehmender Rechenauslastung und die Verkürzung der Taktung mit abnehmender Rechenauslastung ergibt sich der Vorteil, dass Rechenkapazität bedarfsabhängig von den Datenverarbeitungsprozessen zu den Eingangsdatenprüfprozessen bzw. umgekehrt verlagert werden kann. Eine Verlängerung der Taktung entspricht dabei einer Verringerung der von den Eingangsdatenprüfprozessen benötigten Rechenkapazität, da der zeitliche Abstand zwischen zwei aufeinanderfolgenden Eingangsdatenprüfprozessen verlängert wird.

Weiterhin ist es besonders bevorzugt, dass bei einem Überschreiten einer vorgebbaren Rechenauslastung die Taktung eines oder mehrerer Eingangsdatenprüfprozesse ausgesetzt wird und der eine oder die mehreren Eingangsdatenprüfprozesse ereignisabhängig ausgelöst werden. Dies entspricht anschaulich einer Verlängerung der Taktung auf "unendlich". Erst bei Auftreten bestimmter Ereignisse werden ein einzelner oder mehrere aufeinanderfolgende Eingangsdatenprüfprozesse ausgeführt. Durch das Aussetzen der Eingangsdatenprüfprozesse kann noch weitere Rechenkapazität von den Eingangsdatenprüfprozessen abgezogen werden und den Datenverarbeitungsprozessen zur Verfügung gestellt werden.

Außerdem ist es zweckmäßig, dass jedes Softwaremodul für seinen Eingangsdatenprüfprozess eine individuelle Taktung aufweist, wobei die individuelle Taktung insbesondere individuell anpassbar ist. Somit ermöglicht das erfindungsgemäße Verfahren eine besonders flexible Verteilung der Gesamtrechenkapazität auf die einzelnen Softwaremodule und Prozesse.

Es ist vorteilhaft, dass das Fahrzeugsystem eine Fahrzeug-zu-X-Kommunikationsvorrichtung ist, insbesondere in einem Kraftfahrzeug. Gerade im Kraftfahrzeugbereich herrscht üblicherweise ein vergleichsweise hoher Kostendruck. Das erfindungsgemäße Verfahren ermöglicht auf einfache Weise eine Reduzierung des notwendigen Kostenaufwands.

Insbesondere ist es vorteilhaft, dass die Fahrzeug-zu-X-Kommunikationsvorrichtung Fahrzeug-zu-X-Botschaften mittels mindestens einer der folgenden Verbindungsarten sendet bzw. empfängt:
- WLAN-Verbindung, insbesondere nach IEEE 802.11p,
- WiFi-Direct,
- ISM-Verbindung (Industrial, Scientific, Medical Band), insbesondere über eine funkverbindungsfähige Schließvorrichtung,
- Bluetooth-Verbindung,
- ZigBee-Verbindung,
- UWB-Verbindung (Ultra Wide Band),
- WiMax (Worldwide Interoperability for Microwave Access),
- Remote-Keyless-Entry-Verbindung,
- funkverbindungsfähige Schließvorrichtung,
- Mobilfunkverbindung, insbesondere GSM-, GPRS-, EDGE-, UMTS- und/oder LTE-Verbindungen und
- Infrarotverbindung.

Diese Verbindungsarten bieten dabei unterschiedliche Vorteile, je nach Art, Wellenlänge und verwendetem Datenprotokoll. So ermöglichen einige der genannten Verbindungsarten z.B. eine vergleichsweise hohe Datenübertragungsrate und einen vergleichsweise schnellen Verbindungsaufbau, andere hingegen eignen sich weitestgehend sehr gut zur Datenübertragung um Sichthindernisse herum. Durch die Kombination und gleichzeitige bzw. parallele Nutzung mehrerer dieser Verbindungsarten ergeben sich weitere Vorteile, da so auch Nachteile einzelner Verbindungsarten ausgeglichen werden können.

Außerdem ist es bevorzugt, dass die Softwaremodule empfangene Fahrzeug-zu-X-Botschaften verarbeiten. Dies trägt aus den genannten Gründen ebenfalls zur Reduzierung des notwendigen Kostenaufwands für Fahrzeug-zu-X-Kommunikationsvorrichtungen im Kraftfahrzeugbereich bei.

Vorteilhafterweise ist es vorgesehen, dass die Taktung ereignisabhängig bei einem Auftreten mindestens eines der folgenden Ereignisse angepasst wird:
- Anwesenheit mindestens einer vorgegebenen Anzahl von Objekten in einem vorgegebenen Bereich (12, 13, 14),
- Anwesenheit mindestens eines vorgegebenen Typs von Objekten in einem vorgegebenen Bereich (12, 13, 14),
- Überschreiten einer vorgegebenen Geschwindigkeit des Kraftfahrzeugs (11),
wobei die Objekte Verkehrsteilnehmer und/oder Infrastruktureinrichtungen sind.

Die genannten Ereignisse stellen jeweils Situationen dar, die das Ausführen eines oder mehrerer Eingangsdatenprüfprozesse notwendig machen können. Die vorgegebenen Bereiche können dabei im einfachsten Fall einen konstanten kreisförmigen Bereich um das Fahrzeug beschreiben. Ebenso können die vorgegebenen Bereiche aber auch in Abhängigkeit der Geschwindigkeit des Fahrzeugs angepasst werden bzw. abhängig von der Ausrichtung bzw. der Fahrtrichtung des Kraftfahrzeugs. Beispielsweise kann der vorgegebene Bereich in Fahrtrichtung des Fahrzeugs größer sein als der Bereich hinter dem Fahrzeug. Typen von Objekten, die das Ausführen eines oder mehrerer Eingangsdatenprüfprozesse notwendig machen können, sind z.B. Rettungsfahrzeuge oder Polizeifahrzeuge im Einsatz sowie Ampeln. Es soll außerdem betont werden, dass die im Zusammenhang mit der Anzahl von Objekten genannten vorgegebenen Bereiche unabhängig von den im Zusammenhang mit dem Objekttyp genannten vorgegebenen Bereichen sein können.

Bevorzugt ist es vorgesehen, dass die Softwaremodule in einer vorgegebenen Prioritätsreihenfolge sortiert sind, wobei die Taktungen der Eingangsdatenprüfprozesse vergleichsweise gering priorisierter Softwaremodule verlängert oder ausgesetzt werden wenn vergleichsweise höher priorisierte Softwaremodule zusätzliche Rechenkapazität beanspruchen. Daraus ergibt sich der Vorteil, dass vergleichsweise höher priorisierte Softwaremodule stets die beanspruchte Rechenkapazität erhalten.

Insbesondere ist es vorgesehen, dass die Softwaremodule hinsichtlich ihrer sicherheitskritischen Bedeutung für das Fahrzeug in der vorgegebenen Prioritätsreihenfolge sortiert sind. Somit wird gewährleistet, dass gerade die sicherheitskritischen Softwaremodule stets die beanspruchte Rechenkapazität erhalten und somit stets zuverlässig arbeiten können.

Weiterhin ist es vorgesehen, dass dem Verfahren ein Vorfilterungsverfahren empfangener Fahrzeug-zu-X-Botschaften und/oder eine Datenmengenreduktion empfangener Fahrzeug-zu-X-Botschaften vorausgeht. Daraus ergibt sich der Vorteil, dass der Rechenaufwand zunächst mittels des an sich bekannten Vorfilterungsverfahrens bzw. der an sich bekannten Datenmengenreduktion und anschließend mittels des erfindungsgemäßen Verfahrens noch weiter reduziert wird. Durch diese Kombination kann eine weitgehende Verringerung des Rechenaufwands bewerkstelligt werden.

Insbesondere ist es vorgesehen, dass die Ereignisse mittels des Vorfilterungsverfahrens erkannt werden. Da das an sich bekannte Vorfilterungsverfahren ohnehin die zu verarbeitenden Daten, insbesondere die empfangenen Fahrzeug-zu-X-Botschaften, analysiert bzw. sortiert, kann dieses Vorfilterungsverfahren ohne die Erzeugung zusätzlichen Rechenaufwands dazu genutzt werden, um ein Ereignis zu erkennen, welches das Ausführen eines oder mehrerer Eingangsdatenprüfprozesse notwendig macht.

Außerdem ist es bevorzugt, dass ein unterer Grenzwert und/oder ein oberer Grenzwert für die individuelle Taktung vorgegeben sind. Somit kann für jedes Softwaremodul unabhängig von der tatsächlichen Rechenauslastung ein Rahmen vorgegebene werden, innerhalb dessen die Taktung veränderbar ist. Dies garantiert z.B. auch bei sehr hoher Rechenauslastung, dass ein Eingangsdatenprüfprozess eines bestimmten Softwaremoduls dennoch mit einer bestimmten Taktung, die dem entsprechenden Grenzwert entspricht, ausgeführt wird.

Die Erfindung betrifft weiterhin eine Fahrzeug-zu-X-Kommunikationsvorrichtung, welche mindestens ein elektronisches Rechenmodul, einen elektronischen Speicher sowie ein Sende- und Empfangsmodul umfasst, wobei das elektronische Rechenmodul eine vorgegebene maximale Rechenkapazität vorhält, wobei das Rechenmodul eine Vielzahl von im elektronischen Speicher abgelegten Softwaremodulen ausführt, wobei die Softwaremodule Rechenkapazität für Datenverarbeitungsprozesse und für Eingangsdatenprüfprozesse beanspruchen und wobei das Rechenmodul die Eingangsdatenprüfprozesse nach Maßgabe einer Taktung wiederholt. Die Fahrzeug-zu-X-Kommunikationsvorrichtung zeichnet sich dadurch aus, dass die Fahrzeug-zu-X-Kommunikationsvorrichtung weiterhin Mittel zur Anpassung der Taktung umfasst und das erfindungsgemäße Verfahren ausführt. Daraus ergeben sich die bereits beschriebenen Vorteile.

Des Weiteren betrifft die Erfindung eine Verwendung der erfindungsgemäßen Fahrzeug-zu-X-Kommunikationsvorrichtung in einem Kraftfahrzeug.

Weitere bevorzugte Ausführungsformen ergeben sich aus den Unteransprüchen und der nachfolgenden Beschreibung eines Ausführungsbeispiels an Hand von Figuren.

Es zeigen
- Fig. 1: beispielhaft einen um ein Kraftfahrzeug herum vorgegebenen Bereich, welcher sich geschwindigkeitsabhängig ändert,
- Fig. 2: ein Flussdiagramm eines möglichen Ablaufs des erfindungsgemäßen Verfahrens und
- Fig. 3: eine Anpassung einer Taktung eines Eingangsdatenprüfprozesses eines Softwaremoduls in Abhängigkeit von der Rechenauslastung des Rechenmoduls.

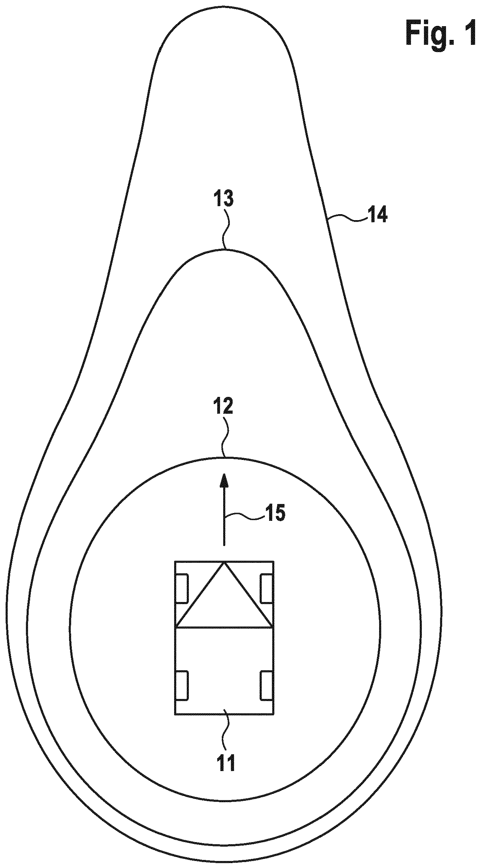

Fig. 1 zeigt Kraftfahrzeug 11, welches mit einer erfindungsgemäßen Fahrzeug-zu-X-Kommunikationsvorrichtung ausgestattet ist, wobei die Fahrzeug-zu-X-Kommunikationsvorrichtung das erfindungsgemäße Verfahren zur Reduzierung einer vorzuhaltenden Gesamtrechenkapazität ausführt. Kraftfahrzeug 11 bewegt sich in Richtung von Pfeil 15. Mittels eines an sich bekannten Vorfilterungsverfahrens werden alle empfangenen Fahrzeug-zu-X-Botschaften zunächst analysiert, wobei als nicht relevant erkannte Fahrzeug-zu-X-Botschaften verworfen werden und dementsprechend nicht weiter verarbeitet werden. Dieses Vorfilterungsverfahren geht der Ausführung des erfindungsgemäßen Verfahrens voraus. Um Kraftfahrzeug 11 herum sind (nicht maßstabsgetreu) vorgegebene Bereiche 12, 13 und 14 zu sehen, wobei Bereiche 12, 13 und 14 geschwindigkeitsabhängig gewählt werden. Bereich 12 wird bei Geschwindigkeiten unter 15 km/h gewählt, Bereich 13 bei Geschwindigkeiten zwischen 15 km/h und 50 km/h und Bereich 14 bei Geschwindigkeiten über 50 km/h. Da ein elektronisches Rechenwerk der Fahrzeug-zu-X-Kommunikationsvorrichtung in Kraftfahrzeug 11 beispielsgemäß vorübergehend eine sehr hohe Rechenauslastung aufweist, werden die Eingangsdatenprüfprozesse von zwei Softwaremodulen vorübergehend ausgesetzt. Somit steht mehr Rechenkapazität für die Datenverarbeitungsprozesse zur Verfügung. Bei den zwei Softwaremodulen handelt es sich um einen Ampelphasenassistenten und einen Stauwarner. Da Kraftfahrzeug 11 sich mit einer Geschwindigkeit von 55 km/h fortbewegt, wird Bereich 14 auf das Auftreten von Ereignissen hin überwacht, welche das Ausführen eines Eingangsdatenprüfprozesses eines der beiden genannten Softwaremodule (Ampelphasenassistent und Stauwarner) auslösen. Dieses Überwachen geschieht durch das Vorfilterungsverfahren. Da in Bereich 14 nun fünf weitere Kraftfahrzeuge erkannt werden (nicht dargestellt), wird ein Eingangsdatenprüfprozess des Stauwarners ausgeführt und mit einer Taktung von einer Wiederholung je Sekunde solange wiederholt, bis sich die Anzahl der Kraftfahrzeuge in Bereich 14 wieder reduziert.

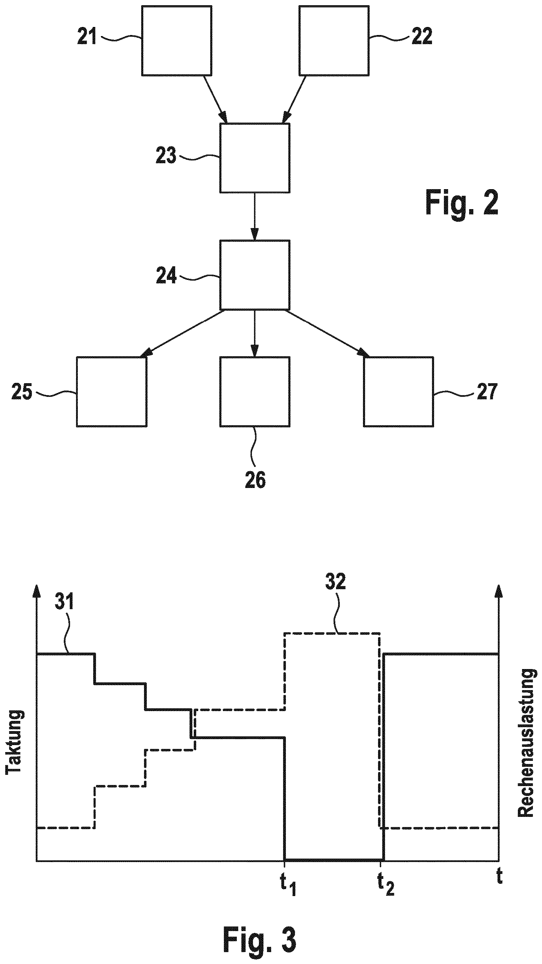

In Fig. 2 ist ein Flussdiagramm mit einem möglichen Ablauf des erfindungsgemäßen Verfahrens zu sehen. In Verfahrensschritt 21 beansprucht eine Vielzahl von Softwaremodulen Rechenkapazität von einem elektronischen Rechenmodul zur Ausführung von Datenverarbeitungsprozessen. Gleichzeitig beansprucht die Vielzahl von Softwaremodulen Rechenkapazität zur Ausführung von Eingangsdatenprüfprozessen in Schritt 22. Die elektronische Recheneinheit stellt die beanspruchte Rechenkapazität sowohl für die Datenverarbeitungsprozesse als auch für die Eingangsdatenprüfprozesse in Schritt 23 zur Verfügung. Im folgenden Schritt 24 ermittelt das Rechenmodul seine Rechenauslastung. Abhängig vom Ergebnis der Bestimmung der Rechenauslastung in Schritt 24 wird entweder Schritt 25, Schritt 26 oder Schritt 27 ausgeführt. Sofern in Schritt 24 erkannt wurde, dass die Rechenauslastung unterhalb eines Schwellwerts liegt, werden in Schritt 25 sowohl die Datenverarbeitungsprozesse als auch die Eingangsdatenprüfprozesse unverändert ausgeführt. Falls in Schritt 24 jedoch erkannt wurde, dass die Rechenauslastung einen ersten Schwellwert überschritten hat, so wird in Schritt 26 die Taktung der auf dem Rechenmodul ausgeführten Softwaremodule verlängert, um bei der Ausführung der Eingangsdatenprüfprozesse Rechenkapazität einzusparen und diese den Datenverarbeitungsprozessen zur Verfügung zu stellen. Wenn in Schritt 24 festgestellt wurde, dass die Rechenauslastung sogar einen zweiten Schwellwert überschritten hat, so werden in Schritt 27 die Taktungen von fünf in einer vorgegebenen Prioritätsreihenfolge sortierten und als vergleichsweise gering priorisierten Softwaremodulen vollständig ausgesetzt. Dies spart zusätzliche Rechenkapazität ein, welche nun den Datenverarbeitungsprozessen zur Verfügung gestellt werden kann.

Fig. 3 zeigt schematisch die Taktung eines Eingangsdatenprüfprozesses eines Softwaremoduls (Kurve 31, durchgezogene Linie) in Abhängigkeit von der Rechenauslastung des Rechenmoduls (Kurve 32, gestrichelte Linie) über die Zeit t. Wie zu sehen ist, weist der Eingangsdatenprüfprozess zunächst eine vergleichsweis kurze Taktung auf, d.h. er wird in vergleichsweise kurzen zeitlichen Abständen wiederholt. Gleichzeitig ist die Rechenauslastung des Rechenmoduls anfangs vergleichsweise gering. Mit fortschreitender Zeit t nimmt die Rechenauslastung des Rechenmoduls stufenartig zu. Um dieser Zunahme der Rechenauslastung entgegenzuwirken, wird die Taktung des Eingangsdatenprüfprozesses des Softwaremoduls im gleichen Maße verlängert. Zum Zeitpunkt t₁ schließlich steigt die Rechenauslastung nochmals sprungartig an, weshalb die Taktung nun ausgesetzt wird. Zum Zeitpunkt t₂ sind die rechenlastintensiven Datenverarbeitungsprozesse, welche für den Anstieg der Rechenauslastung verantwortlich waren, abgeschlossen. Entsprechend wird die Taktung wieder auf den ursprünglichen Wert reduziert.

## Patentansprüche

1. Verfahren zur Reduzierung einer vorzuhaltenden Gesamtrechenkapazität, bei welchem ein elektronisches Rechenmodul einer Fahrzeug-Zu-X-Kommunikationsvorrichtung die Gesamtrechenkapazität vorhält, wobei eine Vielzahl von Softwaremodulen vom elektronischen Rechenmodul ausgeführt wird, wobei die Softwaremodule Rechenkapazität für Datenverarbeitungsprozesse und für Eingangsdatenprüfprozesse beanspruchen und wobei die Eingangsdatenprüfprozesse nach Maßgabe einer Taktung (31) wiederholt werden, wobei die Taktung den zeitlichen Abstand zwischen zwei aufeinanderfolgenden Eingangsdatenprüfprozessen vorgibt, **dadurch gekennzeichnet, dass** die Taktung (31) anpassbar ist, wobei die Taktung (31) abhängig von einer Rechenauslastung (32) des Rechenmoduls angepasst wird.

2. Verfahren nach Anspruch 1,
**dadurch gekennzeichnet, dass** die Taktung (31) mit zunehmender Rechenauslastung (32) verlängert wird und mit abnehmender Rechenauslastung (32) verkürzt wird.

3. Verfahren nach mindestens einem der Ansprüche 1 und 2, **dadurch gekennzeichnet, dass** bei einem Überschreiten einer vorgebbaren Rechenauslastung (32) die Taktung (31) eines oder mehrerer Eingangsdatenprüfprozesse ausgesetzt wird und der eine oder die mehreren Eingangsdatenprüfprozesse ereignisabhängig ausgelöst werden.

4. Verfahren nach mindestens einem der Ansprüche 1 bis 3, **dadurch gekennzeichnet, dass** jedes Softwaremodul für seinen Eingangsdatenprüfprozess eine individuelle Taktung (31) aufweist, wobei die individuelle Taktung (31) individuell anpassbar ist.

5. Verfahren nach mindestens einem der Ansprüche 1 bis 4, **dadurch gekennzeichnet, dass** die Fahrzeug-zu-X-Kommunikationsvorrichtung in einem Kraftfahrzeug (11) ist.

6. Verfahren nach Anspruch 5,
**dadurch gekennzeichnet, dass** die Softwaremodule empfangene Fahrzeug-zu-X-Botschaften verarbeiten.

7. Verfahren nach mindestens einem der Ansprüche 1 bis 6, **dadurch gekennzeichnet, dass** die Taktung (31) ereignisabhängig bei einem Auftreten mindestens eines der folgenden Ereignisse angepasst wird:
- Anwesenheit mindestens einer vorgegebenen Anzahl von Objekten in einem vorgegebenen Bereich (12, 13, 14),
- Anwesenheit mindestens eines vorgegebenen Typs von Objekten in einem vorgegebenen Bereich (12, 13, 14),
- Überschreiten einer vorgegebenen Geschwindigkeit des Kraftfahrzeugs (11),
wobei die Objekte Verkehrsteilnehmer und/oder Infrastruktureinrichtungen sind.

8. Verfahren nach mindestens einem der Ansprüche 1 bis 7, **dadurch gekennzeichnet, dass** die Softwaremodule in einer vorgegebenen Prioritätsreihenfolge sortiert sind, wobei die Taktungen (31) der Eingangsdatenprüfprozesse vergleichsweise gering priorisierter Softwaremodule verlängert oder ausgesetzt werden wenn vergleichsweise höher priorisierte Softwaremodule zusätzliche Rechenkapazität beanspruchen.

9. Verfahren nach Anspruch 8, **dadurch gekennzeichnet, dass** die Softwaremodule hinsichtlich ihrer sicherheitskritischen Bedeutung für das Kraftfahrzeug in der vorgegebenen Prioritätsreihenfolge sortiert sind.

10. Verfahren nach mindestens einem der Ansprüche 1 bis 9, **dadurch gekennzeichnet, dass** dem Verfahren ein Vorfilterungsverfahren empfangener Fahrzeug-zu-X-Botschaften und/oder eine Datenmengenreduktion empfangener Fahrzeug-zu-X-Botschaften vorausgeht.

11. Verfahren nach den Ansprüchen 7 und 10,
**dadurch gekennzeichnet, dass** die Ereignisse mittels des Vorfilterungsverfahrens erkannt werden.

12. Verfahren nach mindestens einem der Ansprüche 4 bis 11,
**dadurch gekennzeichnet, dass** ein unterer Grenzwert und/oder ein oberer Grenzwert für die individuelle Taktung (31) vorgegeben sind.

13. Fahrzeug-zu-X-Kommunikationsvorrichtung, mindestens umfassend ein elektronisches Rechenmodul, einen elektronischen Speicher sowie ein Sende- und Empfangsmodul, wobei das elektronische Rechenmodul eine vorgegebene maximale Rechenkapazität vorhält, wobei das Rechenmodul eine Vielzahl von im elektronischen Speicher abgelegten Softwaremodulen ausführt, wobei die Softwaremodule Rechenkapazität für Datenverarbeitungsprozesse und für Eingangsdatenprüfprozesse beanspruchen und wobei das Rechenmodul die Eingangsdatenprüfprozesse nach Maßgabe einer Taktung (31) wiederholt,
**dadurch gekennzeichnet, dass** die Fahrzeug-zu-X-Kommunikationsvorrichtung weiterhin Mittel zur Anpassung der Taktung (31) umfasst und ein Verfahren nach mindestens einem der Ansprüche 1 bis 12 ausführt.

14. Verwendung der Fahrzeug-zu-X-Kommunikationsvorrichtung nach Anspruch 13 in einem Kraftfahrzeug (11).

## Claims

1. A method for reducing a total computation capacity that needs to be kept, in which an electronic computation module of a vehicle-to-X communication apparatus keeps the total computation capacity, wherein a multiplicity of software modules are executed by the electronic computation module, wherein the software modules take up computation capacity for data processing processes and for input data checking processes and wherein the input data checking processes are repeated in accordance with a timing (31), wherein the timing predefines the temporal distance between two successive input data checking processes, **characterised in that** the timing (31) is adjustable, wherein the timing (31) is adjusted depending on a computation utilization (32) of the computation module.

2. The method according to Claim 1,
**characterised in that** the timing (31) is lengthened with an increasing computation utilization (32) and is shortened with a decreasing computation utilization (32).

3. The method according to at least one of Claims 1 and 2, **characterised in that** if a predefinable computation utilization (32) is exceeded, the timing (31) of one or more input data checking processes is stopped and the one or the multiple input data checking processes is/are triggered in an event-dependent manner.

4. The method according to at least one of Claims 1 to 3, **characterised in that** each software module has an individual timing (31) for its input data checking process, wherein the individual timing (31) is individually adjustable.

5. The method according to at least one of Claims 1 to 4,
**characterised in that** the vehicle-to-X communication apparatus is in a motor vehicle (11).

6. The method according to Claim 5,
**characterised in that** the software modules process received vehicle to-X messages.

7. The method according to at least one of Claims 1 to 6, **characterised in that** the timing (31) is adjusted on an event-dependent basis when at least one of the following events occurs:
- presence of at least a predefined number of objects in a predefined area (12, 13, 14),
- presence of at least one predefined type of objects in a predefined area (12, 13, 14),
- exceeding of a predefined speed of the motor vehicle (11),
wherein the objects are road users and/or infrastructure facilities.

8. The method according to at least one of Claims 1 to 7, **characterised in that** the software modules are sorted in a predefined priority sequence, wherein the timings (31) of the input data checking processes of comparatively low-prioritized software modules are lengthened or stopped if comparatively more highly prioritized software modules take up additional computation capacity.

9. The method according to Claim 8, **characterised in that** the software modules are sorted in the predefined priority sequence with respect to their safety-critical importance for the motor vehicle.

10. The method according to at least one of Claims 1 to 9, **characterised in that** the method is preceded by a method of prefiltering received vehicle-to-X messages and/or by a data volume reduction of received vehicle-to-X messages.

11. The method according to Claims 7 and 10,
**characterised in that** the events are recognized by means of the prefiltering method.

12. The method according to at least one of Claims 4 to 11,
**characterised in that** a lower limit value and/or an upper limit value are predefined for the individual timing (31).

13. A vehicle-to-X communication apparatus, comprising at least one electronic computation module, an electronic storage device and a transceiver module, wherein the electronic computation module keeps a predefined maximum computation capacity, wherein the computation module executes a multiplicity of software modules stored in the electronic storage device, wherein the software modules take up computation capacity for data processing processes and for input data checking processes and wherein the computation module repeats the input data checking processes in accordance with a timing (31), **characterised in that** the vehicle-to-X communication apparatus furthermore comprises means for adjusting the timing (31) and carries out a method according to at least one of Claims 1 to 12.

14. Use of the vehicle-to-X communication apparatus according to Claim 13 in a motor vehicle (11).

## Revendications

1. Procédé de réduction d'une capacité de calcul totale à tenir à disposition, sur lequel un module de calcul électronique d'un dispositif de communication de véhicule à X tient à disposition la capacité de calcul totale, une multiplicité de modules logiciels étant exécutés par le module de calcul électronique, les modules logiciels utilisant la capacité de calcul pour des processus de traitement de données et pour des processus de contrôle de données d'entrée, et les processus de contrôle de données d'entrée étant répétés conformément à un cadencement (31), le cadencement spécifiant l'écart temporel entre deux processus de contrôle de données d'entrée successifs, **caractérisé en ce que** le cadencement (31) est ajustable, le cadencement (31) étant ajusté en fonction d'un taux d'utilisation de calcul (32) du module de calcul.

2. Procédé selon la revendication 1,
**caractérisé en ce que** le cadencement (31) est allongé lorsque le taux d'utilisation de calcul (32) croît et est resserré lorsque le taux d'utilisation de calcul (32) décroît.

3. Procédé selon au moins l'une des revendications 1 et 2,
**caractérisé en ce que** le cadencement (31) d'un ou de plusieurs processus de contrôle de données d'entrée est suspendu lors d'un dépassement d'un taux d'utilisation de calcul (32) prédéfinissable et **en ce que** le ou les plusieurs processus de contrôle de données d'entrée sont déclenchés en fonction d'un événement.

4. Procédé selon au moins l'une des revendications 1 à 3,
**caractérisé en ce que** chaque module logiciel présente un cadencement (31) individuel pour son processus de contrôle de données d'entrée, le cadencement individuel (31) étant ajustable de façon individuelle.

5. Procédé selon au moins l'une des revendications 1 à 4,
**caractérisé en ce que** le dispositif de communication de véhicule à X est dans un véhicule à moteur (11).

6. Procédé selon la revendication 5,
**caractérisé en ce que** les modules logiciels traitent des messages de véhicule à X reçus.

7. Procédé selon au moins l'une des revendications 1 à 6,
**caractérisé en ce que** le cadencement (31) est ajusté en fonction d'un événement lors d'une apparition d'au moins un des événements suivants :
- présence d'au moins un nombre prédéfini d'objets dans une zone prédéfinie (12, 13, 14),
- présence d'au moins un type prédéfini d'objets dans une zone prédéfinie (12, 13, 14),
- dépassement d'une vitesse prédéfinie du véhicule à moteur (11),
les objets étant des usagers de la route et/ou des infrastructures.

8. Procédé selon au moins l'une des revendications 1 à 7,
**caractérisé en ce que** les modules logiciels sont classés dans un ordre de priorité prédéfini, les cadencements (31) des processus de contrôle de données d'entrée de modules logiciels comparativement plus faiblement prioritaires étant allongés ou suspendus lorsque des modules logiciels comparativement plus fortement prioritaires utilisent une capacité de calcul supplémentaire.

9. Procédé selon la revendication 8, **caractérisé en ce que** les modules logiciels sont classés dans l'ordre de priorité prédéfini relativement à leur importance en termes de sécurité pour le véhicule à moteur.

10. Procédé selon au moins l'une des revendications 1 à 9,
**caractérisé en ce qu'**un procédé de préfiltrage de messages de véhicules à X reçus et/ou une réduction de volumes de données de messages de véhicule à X reçus précèdent le procédé.

11. Procédé selon les revendications 7 et 10,
**caractérisé en ce que** les événements sont identifiés au moyen du procédé de préfiltrage.

12. Procédé selon au moins l'une des revendications 4 à 11,
**caractérisé en ce qu'**une valeur seuil inférieure et/ou une valeur seuil supérieure sont prédéfinies pour le cadencement (31) individuel.

13. Dispositif de communication de véhicule à X, comprenant au moins un module de calcul électronique, une mémoire électronique ainsi qu'un module d'émission et de réception, le module de calcul électronique tenant à disposition une capacité de calcul maximale prédéfinie, le module de calcul exécutant une multiplicité de modules logiciels enregistrés dans la mémoire électronique, les modules logiciels utilisant de la capacité de calcul pour les processus de traitement de données et pour les processus de contrôle de données d'entrée et le module de calcul répétant les processus de contrôle de données d'entrée conformément à un cadencement (31),
**caractérisé en ce que** le dispositif de communication de véhicule à X comprend en outre des moyens pour l'ajustement du cadencement (31) et exécute un procédé selon au moins l'une des revendications 1 à 12.

14. Utilisation du dispositif de communication de véhicule à X selon la revendication 13 dans un véhicule à moteur (11).
